# EUROPÄISCHE PATENTSCHRIFT

(11) **EP 2 157 008 B1**
(45) Veröffentlichungstag und Bekanntmachung des Hinweises auf die Patenterteilung: **25.12.2013**
(21) Anmeldenummer: 09007058.2
(22) Anmeldetag: 27.05.2009
(51) Int. Cl.: B62D 5/04, B60G 7/00, B62D 7/20, B62D 7/10, F16F 7/12, F16H 25/20, F16H 57/00

(54) **Lenkungsaktuator für eine hintere Radaufhängung**
Steering actuator for a rear wheel suspension
Actionneur de direction pour une suspension de roue arrière

(30) Priorität: 22.08.2008 DE 102008039304
(43) Veröffentlichungstag der Anmeldung: 24.02.2010
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A1- 1 110 846
- DE-A1-102005 035 872
- DE-A1-102007 002 964
- FR-A1- 2 605 280

## Beschreibung

Die Erfindung betrifft einen Lenkungsaktuator einer hinteren Radaufhängung von Kraftfahrzeugen gemäß dem Oberbegriff des Patentanspruches 1.

Zur verbesserten Fahrdynamik von Kraftfahrzeugen sind aktive Hinterradaufhängungen bekannt, bei denen die Räder nach Maßgabe fahrdynamischer Parameter um einige Winkelgrade gelenkt werden.

Hinsichtlich solcher Hinterachslenkungen gibt es verschiedene technische Lösungen: Bei großräumigen Platzverhältnissen kommen kostengünstige Zentralsteller zum Einsatz. In diesem Fall werden links und rechts des Stellers Spurstangen angelenkt, und der Steller arbeitet analog wie die Lenkung an der Vorderachse. Im Gegensatz zur Vorderachslenkung, die in der Regel mittels Ritzel/Zahnstangenpaarung über eine Lenksäule angetrieben wird, werden Hinterachslenkungen fast ausschließlich ohne separate Lenksäule, nämlich elektrisch oder hydraulisch angetrieben.

Alternativ zum oben erwähnten Zentralsteller setzen sich zunehmend auch elektrische oder hydraulische Einzelsteller an der Hinterachse durch. In der Regel wird vom Einzelsteller eine Spurstange geschoben, oder aber auch in ihrer Länge verändert. Das heißt, im letzteren Fall wird die konventionelle Spurstange durch den Einzelsteller ersetzt.

Ein solcher Einzelsteller ist quasi die Spurstange. Die Spurstange der ursprünglich ungelenkten Version der Hinterachslenkung hat eine gekrümmte

Form. Dies ist gewollt und hat folgenden Grund: Sie ist so bemessen, dass sie bei Überschreiten einer Grenzdruckkraft plastisch ausbiegt, oder aber bei Überschreiten einer Grenzzugkraft plastisch gestreckt wird. Dies erfolgt in beiden Fällen jedoch so, dass keinesfalls ein Bruch der Spurstange auftritt. Das Rad muss unter allen Umständen noch geführt werden.

Würde die Spurstange brechen, wäre keine stabile Fahrsituation sichergestellt. Das Rad könnte unkontrolliert hinsichtlich Vorspur hin- und herpendeln. Der Fahrer soll vielmehr spüren, dass "irgendetwas nicht stimmt", das heißt das Fahrzeug zwar noch eingeschränkt bewegt werden kann, jedoch dringend einer werkstattseitigen Überprüfung bedarf.

Soll die Hinterachse gelenkt werden, und soll dies nicht durch Einzelsteller, sondern durch einen Zentralsteller verwirklicht werden, so besitzt dieser Zentralsteller, ebenso wie die konventionelle Vorderachslenkung, Spurstangen. Die Spurstangen weisen, wie eingangs am Beispiel der Vorderachslenkung beschrieben, ebenso jene Werkstoffeigenschaften und entsprechende Gestaltungsmerkmale auf, die eine gewünschte Verformung bei Missbrauch zulassen. Dabei ist es grundsätzlich sowohl bei Vorderachslenkungen als auch bei Verwendung von Zentralstellern an der Hinterachse so, dass der Überlastfall nicht so kritisch ist, da bei "durchgehender Zahnstange" die Kräfte von links nach rechts und umgekehrt durchgeleitet und abgestützt werden.

Ganz anders verhält es sich bei einem Einzelsteller. Im Unterschied zum Zentralsteller können beim gattungsgemäßen Einzelsteller im Überlastfall auftretende Kräfte nicht in Fahrzeugquerrichtung durchgeleitet werden. Hier ist es so, dass die vollen Missbrauchskräfte, genau wie sie eine konventionelle Spurstange aufnehmen müssen, auch vom Einzelsteller selbst aufgenommen werden müssen. Bei einem Schadensereignis besteht bei dem bekannten, gattungsgemäßen Einzelsteller bzw. Lenkungsaktuator die Gefahr, dass Teile brechen und das Fahrzeugrad unkontrolliert hin- und herpendelt.

Aus der FR 2 605 280 A1 ist ein gattungsgemäßer Lenkungsaktuator für eine Radaufhängung bekannt. Der Lenkungsaktuator weist einen Kugelschraubenmechanismus auf, der über Gummizwischenlagen am Gehäuse abgestützt ist, um Stoßbelastungen aufzunehmen. Derartige Gummizwischenlagen sind jedoch elastisch nachgiebige Elemente und wirken nicht als Deformationselemente, die sich unter Abbau von Verformungsenergie plastisch verformen. Eine solche plastische Verformung findet jedoch bei den oben erwähnten Gummizwischenlagen nicht statt.

Aufgabe der Erfindung ist es, einen Lenkungsaktuator der gattungsgemäßen Art vorzuschlagen, der erhöhten Sicherheitsanforderungen gerecht wird und der zudem baulich und fertigungstechnisch günstig konzipiert ist.

Diese Aufgabe wird erfindungsgemäß mit den Merkmalen des Patentanspruches 1 gelöst. Vorteilhafte Weiterbildungen der Erfindung sind den abhängigen Ansprüchen entnehmbar.

Erfindungsgemäß wird vorgeschlagen, dass in den Kraftfluss zwischen den Anlenkstellen des Lenkungsaktuators am Radträger und am Aufbau ein bei einer unzulässigen Druck- oder Zugkraft nachgiebiges Deformationselement eingeschaltet ist. Das Deformationselement soll insbesondere sicherstellen, dass bei unzulässigen Belastungen, z. B. Bordsteinabdrücken, kein Bruch des relativ steifen Lenkungsaktuators mit damit unterbrochener Spurführung des Rades eintritt. Ein solches Bordsteinabdrücken kann beim Einparken passieren, wenn das Fahrzeugrad bzw. dessen Felge unter einem extrem kleinen Winkel zum Bordstein steht. Auch bei Langsamfahrt bedeutet dies extrem hohe Kräfte auf die Spurstange. Ferner soll der Stelltrieb des Lenkungsaktuators vor Überlastungen und damit gegebenenfalls verbundenen Funktionsstörungen geschützt werden.

Das erfindungsgemäße Deformationselement wird im Missbrauchsfall lediglich plastisch verformt und bricht nicht. Damit werden analoge Verhältnisse wie bei herkömmlichen plastisch verformbaren Spurstangen geschaffen. Dieses Deformationselement wird vorzugsweise im Inneren des Stellelementes, welches die Längenänderung der Spurstange bewirkt, untergebracht.

Das Deformationselement kann funktionell besonders günstig zwischen dem Abtriebselement des Stelltriebes und dem Lenkerabschnitt angeordnet, insbesondere in diesen baulich integriert sein.

Dabei kann das Deformationselement innerhalb eines rohrförmigen Führungsteils des Abtriebselementes vorgesehen sein, wobei durch diese teleskopische Anordnung ein ausreichender Verformungsweg bei einer axial besonders kurz bauenden Konstruktion sichergestellt ist.

Das Deformationselement kann ferner als rohrförmiges Teil des Lenkerabschnittes ausgeführt sein, das über eine definierte Länge in das Führungsrohr des Abtriebselementes einragt, wobei das rohrförmige Teil einerseits im Führungsrohr verschiebbar geführt ist und andererseits im Abtriebselement befestigt ist. Dazwischen kann es somit in sich in Längsrichtung nachgiebig konstruiert sein, z. B. durch zwei sich teleskopisch überlappende Rohrabschnitte, die mittels einer Pressverbindung als ein Deformationselement wirken.

Baulich und fertigungstechnisch besonders günstig kann das rohrförmige Deformationselement innerhalb des Führungsrohres jedoch als ein plastisch verformbares Wellrohr ausgeführt sein.

Das Führungsrohr kann des Weiteren einstückig mit einer rohrförmigen Gewindespindel als Abtriebselement ausgebildet sein, die in Verbindung mit einer elektromotorisch angetriebenen Gewindemutter den Stelltrieb bildet. Diese Anordnung hat unter anderem den Vorteil, dass sich das Deformationselement innerhalb des Führungsrohres und der Gewindespindel mit einer adäquaten Längserstreckung vorsehen lässt.

In vorteilhafter Weiterbildung der Erfindung kann das Wellrohr des Deformationselementes endseitig eine mit der Gewindespindel fest verbundene Lagerbüchse tragen, die auf einem gehäusefesten, in das Wellrohr einragenden Führungszapfen verschiebbar geführt ist. Der Führungszapfen stellt somit in fertigungstechnisch einfacher Konzeption eine stabile Längsführung sowohl der Gewindespindel als auch des Deformationselementes sicher.

Dabei kann der Führungszapfen in vorteilhafter Ausgestaltung in Umfangsrichtung formschlüssig mit der Lagerbüchse zusammenwirken und bildet somit zugleich eine Verdrehsicherung für die Gewindespindel. Der Führungszapfen sowie die Lagerbüchse können z. B. im Querschnitt gesehen als Vierkant, Sechskant, etc. ausgeführt sein.

Die Lagerbüchse kann des Weiteren einfach und zuverlässig befestigt werden, indem sie mit einem angeformten Ringbund in eine zur Stirnseite offene Ringnut der Gewindespindel eingesetzt und durch stirnseitiges Verrollen mit dieser fest verbunden ist.

Eine stabile, Biegemomente zuverlässig aufnehmende Lagerung der verschieblichen Funktionsteile des Lenkungsaktuators kann ferner dadurch erzielt werden, dass das Führungsrohr über eine Gleitlagerung im Gehäuse und der Lenkerabschnitt über eine Gleitlagerung in dem Führungsrohr verschiebbar geführt ist, wobei die beiden Gleitlagerungen im Wesentlichen radial übereinander oder nahe beieinander positioniert sind.

Der Stelltrieb kann besonders bevorzugt ein Kugelgewindetrieb sein, dessen Kugelmutter im Gehäuse drehbar, jedoch axial unverschiebbar gelagert ist, wobei die Kugelmutter zugleich den hohlzylindrischen Rotor des Elektromotors trägt, dessen Statorwicklungen ringförmig um den Rotor angeordnet sind. Dies ermöglicht eine besonders robuste und schnell auf Lenksignale ansprechende Konstruktion des Lenkungsaktuators mit integriertem Deformationselement.

Dabei können sich zur Unterstützung einer relativ kurz bauenden, baulich günstigen Konzeption und zu einer günstigen Auslegung des Elektromotors das Führungsrohr mit der Gewindespindel und das Deformationselement weitgehendst in den hohlzylindrischen Rotor des Elektromotors hinein erstrecken.

Schließlich kann in besonders günstiger Anordnung des Lenkungsaktuators in der Radaufhängung das Gehäuse des Lenkungsaktuators ein Lenkerauge zum Anschluss an den Aufbau des Kraftfahrzeuges und der relativ zum Gehäuse über den Stelltrieb längenveränderliche Lenkerabschnitt ein Lenkerauge zum Anschluss an den Radträger der Radaufhängung des Kraftfahrzeuges aufweisen.

Ein Ausführungsbeispiel der Erfindung ist im folgenden mit weiteren Einzelheiten näher erläutert.

Die schematische Zeichnung zeigt einen Längsschnitt durch einen Lenkungsaktuator mit einem Gehäuse, einem elektromotorischen Stelltrieb und einem an einem Lenkerabschnitt angeordneten Deformationselement.

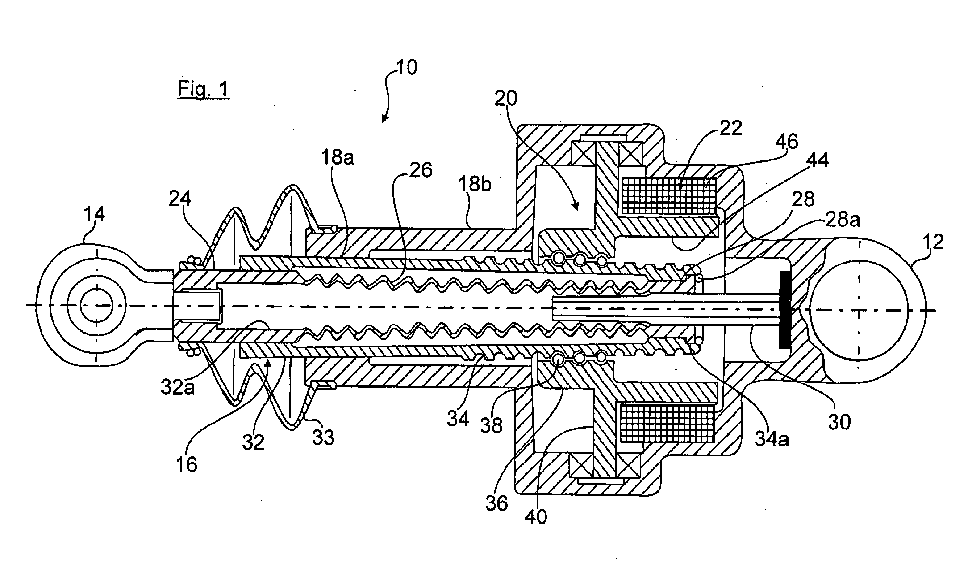

In der Zeichnung ist ein Lenkungsaktuator 10 für eine hintere Radaufhängung von Kraftfahrzeugen dargestellt, der mit einem gehäuseseitigen Lenkerauge 12 am Aufbau (oder einem Hilfsrahmen) des Kraftfahrzeuges und mit einem weiteren Lenkerauge 14 an einem Radträger der Radaufhängung angelenkt ist und der als spurführender, längenveränderlicher Lenker wirkt. In den Lenkeraugen 12, 14 sind in bekannter Weise Gummi-Metall-Hülsenlager (nicht näher dargestellt) vorgesehen.

Der Lenkungsaktuator 10 setzt sich im Wesentlichen zusammen aus einem Lenkerabschnitt 16, einem Gehäuse 18 und einem Stelltrieb 20, der mittels eines in das Gehäuse integrierten Elektromotors 22 betätigbar ist.

Der Lenkerabschnitt 16 weist einen rohrförmigen, rotationssymetrischen Führungsabschnitt 24 auf, der mit dem Lenkerauge 14 fest verbunden ist und der in ein Wellrohr 26 als Deformationselement übergeht. Am Ende des Wellrohres 26 ist eine Lagerbüchse 28 angeordnet, die in Umfangsrichtung formschlüssig auf einem am Gehäuse 18 befestigten Führungszapfen 30 verschiebbar geführt ist.

Der Führungszapfen 30 ist im Querschnitt betrachtet als Vielkant (oder z. B. mit Schlüsselflächen) ausgeführt, auf dem die Lagerbüchse 28 mit korrespondierenden Lagerflächen unverdrehbar geführt ist. Der Führungszapfen 30 ragt dabei wie aus der Zeichnung ersichtlich in das Wellrohr 26 hinein.

Der Lenkerabschnitt 16 ist mit seinem Führungsabschnitt 24 in einem Führungsrohr 32 axial verschiebbar über eine Gleitlagerung 32a gelagert, die zur Erzielung einer weitgehenden Spielfreiheit eine entsprechende Passung ausweist.

Das Führungsrohr 32 ist wiederum über eine Gleitlagerung 18a in dem Gehäuse 18 des Lenkungsaktuators 10 axial verschiebbar geführt. Wie aus der Zeichnung ersichtlich ist, liegen die beiden Gleitlagerungen 32a, 18a nahe beieinander, so dass eine auch in Querrichtung besonders steife, präzise Führung des Lenkerabschnittes 16 gegeben ist. Zwischen dem Führungsabschnitt 24 und dem rohrförmigen Abschnitt 18b des Gehäuses 18 ist eine die besagten Gleitlagerungen abdeckende, gummielastische Staubschutzmanschette 33 angeordnet.

Das Führungsrohr 32 geht einstückig in eine Gewindespindel 34 über, die als Abtriebselement des als Kugelgewindetrieb ausgeführten Stelltriebes 20 dient. Am stirnseitigen Ende der Gewindespindel 34 ist eine zur Stirnseite offene Ringnut 34a eingearbeitet, in die ein an die Lagerbüchse 28 angeformter Ringbund 28a einragt. Durch Umformen bzw. Verrollen der überstehenden Stirnseite ist die Ringnut 34a geschlossen bzw. die Lagerbüchse 28 fest mit der Gewindespindel 34 verbunden.

Auf der Gewindespindel 34 ist die Kugelgewindemutter 36 unter Zwischenschaltung von Kugeln 38 als Wälzelemente drehbar gelagert. Ferner weist die Kugelgewindemutter 36 einen Radialflansch 40 auf, über den sie im Gehäuse 18 axial unverschiebbar gelagert ist. Dazu sind beiderseits des Radialflansches 40 im Gehäuse 18 Wälzlager 42 (Rollen- oder Nadellager) angeordnet.

An den Radialflansch 40 wiederum schließt ein hohlzylindrisch ausgeführter Rotor 44 an, um den herum im Gehäuse 18 die Statorwicklungen 46 des antreibenden Elektromotors 22 vorgesehen sind. Der Elektromotor 22 kann soweit nicht beschrieben bekannter Bauart sein. Er kann auch mit einer Bremse oder Arretierung kombiniert sein, um eine Verdrehung der Kugelgewindemutter 36 bei nicht aktiviertem Elektromotor 22 auszuschließen.

Das Deformationselement 26 des Lenkerabschnittes 16 ist konstruktiv so ausgelegt, dass es bei auftretenden Lenkkräften oder -momenten solange als ein in sich steifes Bauteil wirkt, als diese Belastungen ein zulässiges Maß nicht überschreiten. Solange bildet das Abtriebselement aus Gewindespindel 34 und Führungsrohr 32 eine Funktionseinheit mit dem Lenkungsabschnitt 16, die eine exakte Spurführung des Rades der Radaufhängung sicherstellt.

Spuränderungen können ebenso exakt über den Stelltrieb 20 gesteuert werden, dessen Kugelgewindemutter 36 über den Elektromotor 22 entsprechend verdreht wird.

Im Falle des Auftretens unzulässig hoher Lenkkräfte oder -momente, z. B. bei einer Kollision des Rades der Radaufhängung mit einem Randstein, tritt eine Verformung des abtriebsseitig eingeschalteten Deformationselementes bzw. Wellrohres 26 auf, die Aufprallenergie absorbiert und Überbelastungen des Stelltriebes 20 sowie des gesamten Lenkungsaktuators 10 vermeidet.

Dabei kann sich der Führungsabschnitt 24 mit dem Lenkerauge 14 relativ zum abtriebsseitigen Führungsrohr 32 und der Gewindespindel 34 entsprechend verschieben. Die Verformung des Wellrohres 26 kann sowohl in Druckrichtung als auch in Zugrichtung erfolgen.

Damit ist in weit größerem Umfange sichergestellt, dass im Antriebszug des Lenkungsaktuators 10 und/oder an dessen Bauteilen (z. B. dem Gehäuse 18 oder an den Lenkeraugen 12, 14) kein Materialbruch entsteht, der die triebliche Verbindung zum Rad der Radaufhängung des Kraftfahrzeuges unterbricht.

Es versteht sich, dass ein Ansprechen des Deformationselementes 26 zu einer fehlerhaften Spurführung des über den Lenkungsaktuator 10 gelenkten Rades führt und selbstverständlich nach dem auslösenden Ereignis eine Überprüfung des Lenksystems in einer Fachwerkstatt erfordert. Das Kraftfahrzeug bleibt aber in der Regel bedingt fahrbar.

Die Erfindung ist nicht auf das beschriebene Ausführungsbeispiel beschränkt. Anstelle des Kugelgewindetriebes als Stelltrieb 22 könnte auch ein einfacher Gewindetrieb ohne Wälzelemente 38 eingesetzt sein.

Gegebenenfalls könnte auch ein hydraulisch gesteuerter Stelltrieb mit einer Kolben-Zylindereinheit und entsprechenden Steuerventilen verwendet sein, in dessen Antriebszug ein entsprechendes Deformationselement 26 eingeschaltet ist.

## Patentansprüche

1. Lenkungsaktuator einer hinteren Radaufhängung von Kraftfahrzeugen, der einen spurführenden Lenker der Radaufhängung bildet und einerseits an einem Radträger und andererseits am Aufbau des Kraftfahrzeuges angelenkt ist und der einen in einem Gehäuse (18) angeordneten Stelltrieb (20) aufweist, der auf einen Lenkerabschnitt (16) längenveränderlich abtreibt, **dadurch gekennzeichnet, dass** in den Kraftfluss zwischen den Anlenkstellen (12, 14) des Lenkungsaktuators (10) am Radträger und am Aufbau ein bei einer unzulässigen Druck- oder Zugkraft nachgiebiges, plastisch verformbares Deformationselement (26) eingeschaltet ist.

2. Lenkungsaktuator nach Anspruch 1, **dadurch gekennzeichnet, dass** das Deformationselement (26) funktionell zwischen einem Abtriebselement (32, 34) des Stelltriebes (20) und dem Lenkerabschnitt (16) angeordnet ist.

3. Lenkungsaktuator nach Anspruch 2, **dadurch gekennzeichnet, dass** das Deformationselement (26) innerhalb eines rohrförmigen Führungsteiles (32) des Abtriebselementes (34) vorgesehen ist.

4. Lenkungsaktuator nach Anspruch 3, **dadurch gekennzeichnet, dass** das Deformationselement als rohrförmiges Teil (26) des Lenkerabschnittes (16) ausgeführt ist, das bevorzugt über eine definierte Länge in das Führungsrohr (32) des Abtriebelementes einragt, und/oder das rohrförmige Teil (26) einerseits im Führungsrohr (32) verschiebbar geführt ist und andererseits im Abtriebselement befestigt ist.

5. Lenkungsaktuator nach Anspruch 4, **dadurch gekennzeichnet, dass** das rohrförmige Deformationselement, insbesondere innerhalb des Führungsrohres (32), als sich plastisch verformendes Wellrohr (26) ausgeführt ist.

6. Lenkungsaktuator nach einem der Ansprüche 3, 4 oder 5, **dadurch gekennzeichnet, dass** das Führungsrohr (32) einstückig mit einer rohrförmigen Gewindespindel (34) als Abtriebselement ausgebildet ist, die in Verbindung mit einer elektromotorisch angetriebenen Gewindemutter (36) den Stelltrieb (20) bildet.

7. Lenkungsaktuator nach Anspruch 6, **dadurch gekennzeichnet, dass** das Deformationselement (26) endseitig eine mit der Gewindespindel (34) fest verbundene Lagerbüchse (28) trägt, die auf einem gehäusefesten, in das Wellrohr (26) einragenden Führungszapfen (30) verschiebbar geführt ist.

8. Lenkungsaktuator nach Anspruch 7, **dadurch gekennzeichnet, dass** der Führungszapfen (30) in Umfangsrichtung formschlüssig mit der Lagerbüchse (28) zusammenwirkt.

9. Lenkungsaktuator nach Anspruch 7 oder 8, **dadurch gekennzeichnet, dass** die Lagerbüchse (28) mit einem angeformten Ringbund (28a) in eine zur Stirnseite offene Ringnut (34a) der Gewindespindel (34) eingesetzt und insbesondere durch stirnseitiges Verrollen befestigt ist.

10. Lenkungsaktuator nach einem der Ansprüche 3 bis 9, **dadurch gekennzeichnet, dass** das Führungsrohr (32) über eine Gleitlagerung (18a) im Gehäuse (18) und der Lenkerabschnitt (16) über eine Gleitlagerung (32a) in dem Führungsrohr (32) verschiebbar geführt ist, wobei die beiden Gleitlagerungen (18a, 32a) bevorzugt im Wesentlichen radial übereinander oder nahe beieinander positioniert sind.

11. Lenkungsaktuator nach einem der vorhergehenden Ansprüche, **dadurch gekennzeichnet, dass** der Stelltrieb (20) ein Kugelgewindetrieb ist, dessen Kugelgewindemutter (36) im Gehäuse (18) drehbar, jedoch axial unverschiebbar gelagert ist, und dass die Kugelgewindemutter (36) zugleich den hohlzylindrischen Rotor (44) des Elektromotors (22) trägt, dessen Statorwicklungen (46) ringförmig um den Rotor (44) angeordnet sind.

12. Lenkungsaktuator nach einem der Ansprüche 3 bis 11, **dadurch gekennzeichnet, dass** das Führungsrohr (32) mit der Gewindespindel (34) und das Deformationselement (26) sich weitgehendst in den hohlzylindrischen Rotor (44) des Elektromotors (22) hinein erstrecken.

13. Lenkungsaktuator nach einem der vorhergehenden Ansprüche, **dadurch gekennzeichnet, dass** das Gehäuse (18) des Lenkungsaktuators (10) ein Lenkerauge (12) zum Anschluss an den Aufbau des Kraftfahrzeuges und der relativ zum Gehäuse (18) über den Stelltrieb (20) längenveränderliche Lenkerabschnitt (16) ein Lenkerauge (14) zum Anschluss an den Radträger der Radaufhängung des Kraftfahrzeuges aufweist.

## Claims

1. Steering actuator of a rear wheel suspension of motor vehicles, which forms a tracking suspension link of the wheel suspension, is articulated at one end to a hub carrier and at the other end to the bodywork of the motor vehicle and comprises an actuating drive (20) which is arranged in a housing (18) and is driven on a suspension link portion (16) in a length-adjustable manner, **characterised in that** a plastically deformable deformation element (26) which can flex in the event of excessive compressive or tensile force is connected in the power flow between the articulation points (12, 14) of the steering actuator (10) to the hub carrier and to the bodywork.

2. Steering actuator according to claim 1, **characterised in that** the deformation element (26) is functionally arranged between a drive element (32, 34) of the actuating drive (20) and the suspension link portion (16).

3. Steering actuator according to claim 2, **characterised in that** the deformation element (26) is provided within a tubular guide part (32) of the drive element (34).

4. Steering actuator according to claim 3, **characterised in that** the deformation element is configured as a tubular part (26) of the suspension link portion (16) which preferably projects into the guide tube (32) of the drive element over a defined length, and/or the tubular part (26) is displaceably guided in the guide tube (32) and attached in the drive element.

5. Steering actuator according to claim 4, **characterised in that** the tubular deformation element, in particular within the guide tube (32), is configured as a plastically deformable corrugated tube (26).

6. Steering actuator according to any of claims 3 to 5, **characterised in that** the guide tube (32) is formed in one piece with a tubular lead screw (34) as the drive element, which lead screw, together with a threaded nut (36) driven by an electric motor, forms the actuating drive (20).

7. Steering actuator according to claim 6, **characterised in that** the deformation element (26) supports a bearing bush (28) at one end, which bearing bush is fixed to the lead screw (34) and is displaceably guided on a guide pin (30) which is fixed to the housing and projects into the corrugated tube (26).

8. Steering actuator according to claim 7, **characterised in that** the guide pin (30) interacts with a positive fit with the bearing bush (28) in the circumferential direction.

9. Steering actuator according to either claim 7 or claim 8, **characterised in that** the bearing bush (28) having an annular collar (28a) is inserted into an annular groove (34a) of the lead screw (34), which groove is open towards the end face, and in particular is attached by means of rolling on the end face.

10. Steering actuator according to any of claims 3 to 9, **characterised in that** the guide tube (32) is displaceably guided by a slide bearing (18a) in the housing (18) and the suspension link portion (16) is displaceably guided by a slide bearing (32a) in the guide tube (32), the two slide bearings (18a, 32a) preferably being positioned substantially radially above or close to each other.

11. Steering actuator according to any of the preceding claims, **characterised in that** the actuating drive (20) is a ball screw, the ball screw nut (36) of which is mounted in the housing (18) so as to be rotatable but not axially displaceable, and **in that** the ball screw nut (36) at the same time supports the hollow cylindrical rotor (44) of the electric motor (22), the stator windings (46) of which are arranged annularly around the rotor (44).

12. Steering actuator according to any of claims 3 to 11, **characterised in that** the guide tube (32), together with the lead screw (34) and the deformation element (26), extends as far as possible into the hollow cylindrical rotor (44) of the electric motor (22).

13. Steering actuator according to any of the preceding claims, **characterised in that** the housing (18) of the steering actuator (10) comprises a suspension link lug (12) for connecting to the bodywork of the motor vehicle and the suspension link portion (16) which can change its length in relation to the housing (18) by means of the actuating drive (20) comprises a suspension link lug (14) for connecting to the hub carrier of the wheel suspension of the motor vehicle.

## Revendications

1. Actionneur de direction d'une suspension de roue arrière de véhicules automobiles, lequel forme un bras oscillant transversal de guidage de la suspension de roue, est articulé d'un côté au niveau d'un support de roue et de l'autre côté au niveau de la carrosserie du véhicule automobile et qui présente un mécanisme de réglage (20) disposé dans un boîtier (18), lequel déporte sur une longueur variable un segment de bras oscillant transversal (16), **caractérisé en ce qu'**un élément de déformation (26) déformable plastiquement, flexible lors de l'application d'une force de pression ou de traction non admissible est intercalé dans le flux de force entre les emplacements d'articulation (12, 14) de l'actionneur de direction (10) au niveau du support de roue et au niveau de la carrosserie.

2. Actionneur de direction selon la revendication 1, **caractérisé en ce que** l'élément de déformation (26) est disposé de manière fonctionnelle entre un élément de sortie (32 ,34) du mécanisme de réglage (20) et le segment de bras oscillant transversal (16).

3. Actionneur de direction selon la revendication 2, **caractérisé en ce que** l'élément de déformation (26) est prévu à l'intérieur d'une partie de guidage (32) tubulaire de l'élément de sortie (34).

4. Actionneur de direction selon la revendication 3, **caractérisé en ce que** l'élément de déformation est réalisé sous la forme d'une partie tubulaire (26) du segment de bras oscillant transversal (16), laquelle fait saillie, de préférence sur une longueur définie, à l'intérieur du tube de guidage (32) de l'élément de sortie, et/ou **en ce que** la partie tubulaire (26) est d'une part guidée de manière à pouvoir être déplacée par coulissement dans le tube de guidage (32) et est d'autre part fixée dans l'élément de sortie.

5. Actionneur de direction selon la revendication 4, **caractérisé en ce que** l'élément de déformation tubulaire est réalisé, en particulier à l'intérieur du tube de guidage (32), sous la forme d'un tube ondulé (26) se déformant plastiquement.

6. Actionneur de direction selon l'une quelconque des revendications 3, 4 ou 5, **caractérisé en ce que** le tube de guidage (32) est réalisé sous la forme d'un élément de sortie, d'un seul tenant avec une broche filetée (34) tubulaire, laquelle forme le mécanisme de réglage (20) en lien avec un écrou fileté (36) entraîné par un moteur électrique.

7. Actionneur de direction selon la revendication 6, **caractérisé en ce que** l'élément de déformation (26) supporte côté extrémité un coussinet (28) relié de manière solidaire à la broche filetée (34), lequel coussinet est guidé de manière à pouvoir être déplacé par coulissement sur un tourillon de guidage (30) solidaire du boîtier, faisant saillie à l'intérieur du tube ondulé (26).

8. Actionneur de direction selon la revendication 7, **caractérisé en ce que** le tourillon de guidage (30) coopère dans la direction périphérique, par complémentarité de forme avec le coussinet (28).

9. Actionneur de direction selon la revendication 7 ou 8, **caractérisé en ce que** le coussinet (28) est inséré, par un collet annulaire (28a) formé, dans une rainure annulaire (34a), ouverte en direction du côté frontal, de la broche filetée (34) et est en particulier fixé par déplacement côté frontal.

10. Actionneur de direction selon l'une quelconque des revendications 3 à 9, **caractérisé en ce que** le tube de guidage (32) est guidé de manière à pouvoir être déplacé par coulissement dans le boîtier (18) par l'intermédiaire d'un palier à glissement (18a) et le segment de bras oscillant transversal (16) est guidé de manière à pouvoir être déplacé par coulissement dans le tube de guidage (32) par l'intermédiaire d'un palier à glissement (32a), les deux paliers à glissement (18a, 32a) étant positionnés de préférence essentiellement de manière radialement superposée ou à proximité l'un de l'autre.

11. Actionneur de direction selon l'une quelconque des revendications précédentes, **caractérisé en ce que** le mécanisme de réglage (20) est une vis à billes, dont l'écrou fileté sphérique (36) est logé dans le boîtier (18) de manière à pouvoir tourner, toutefois de manière immobile axialement, et **en ce que** l'écrou fileté sphérique (36) supporte dans le même temps le rotor (44) cylindrique creux du moteur électrique (22), dont les enroulements de stator (46) sont disposés autour du rotor (44) de manière à présenter une forme annulaire.

12. Actionneur de direction selon l'une quelconque des revendications 3 à 11, **caractérisé en ce que** le tube de guidage (32) doté de la broche filetée (34) et l'élément de déformation (26) s'étendent largement à l'intérieur du rotor (44) cylindrique creux du moteur électrique (22).

13. Actionneur de direction selon l'une quelconque des revendications précédentes, **caractérisé en ce que** le boîtier (18) de l'actionneur de direction (10) présente un oeillet de bras oscillant transversal (12) destiné à être raccordé à la carrosserie du véhicule automobile, et **en ce que** le segment de bras oscillant transversal (16) dont la longueur peut varier par l'intermédiaire du mécanisme de réglage (20) par rapport au boîtier (18) présente un oeillet de bras oscillant transversal (14) destiné à être raccordé au support de roue de la suspension de roue du véhicule automobile.
